# EUROPEAN PATENT SPECIFICATION

(11) **EP 2 081 350 B1**
(45) Date of publication and mention of the grant of the patent: **18.07.2018**
(21) Application number: 08000864.2
(22) Date of filing: 17.01.2008
(51) Int. Cl.: H04L 29/06, H04N 5/445, H04L 12/18, H04N 21/239, H04N 21/254, H04N 21/258, H04N 21/45, H04N 21/6405, H04N 21/643

(54) **Method and device for processing content and multicast access information and communication system**
Verfahren und Vorrichtung zur Verarbeitung von Inhalts- und Multicast-Zugriffsinformationen und Kommunikationssystem
Procédé et dispositif pour traiter des informations de contenus et d'accès multicast et système de communication

(43) Date of publication of application: 22.07.2009
(73) Proprietor: Nokia Solutions and Networks Oy, 02610 Espoo (FI)
(72) Inventor: Martti, Jyrki, 02100 Espoo (FI); Tuohino, Markku, 02130 Espoo (FI); Westman, Ilkka, 00510 Helsinki (FI)
(74) Representative: Borgström, Markus

(56) References cited:
- WO-A-2007/096001
- WO-A-2007/131548
- US-A1- 2003 106 065
- US-A1- 2007 244 982

## Description

The invention relates to a method and to a device for processing data and to a communication system comprising such a device.

This invention in particular relates to IP Television (IPTV) and to service usage in the area of IPTV. Broadcast TV service, also known as linear TV or scheduled content, is a basic service offered by an IPTV service provider (SP).

In the publication US 2007/244982 A1 (SCOTT III SAMUEL T [US] ET AL), 18 October 2007, a hybrid unicast and multicast data delivery is described, which involves delivering data to client devices partially using a unicast communication and partially using a multicast communication. For example, higher-relevancy television metadata may be extracted from television metadata. A server transmits the higher-relevancy television metadata to a client via a unicast communication burst. The client can otherwise receive the television metadata from the server via a multicast communication stream. Publication US 2003/0106065 A1 (JUNICHI SAKAI [JP] ET AL), 5 June 2003, concerns an information distribution system where broadcasting contents are distributed to an IP network using a multicast address for each set of contents.

Furthermore, a content guide (CG) or an electronic program guide (EPG) or a service guide (SG) or an interactive program guide (IPG) or the like is known as a service that provides information relating to television programs, in particular program information (e.g., starting time, end time, duration, content information, parental rating, etc.). Such information may in particular be obtained via the Internet.

Hence, the term content guide may in particular comprise all the abovementioned terms CG, EPG, SG, IPG. To build up the content guide information, a device responsible for its generation receives content information, e.g., by using an interface designed to request such content information.

Generally, content guide functionality can be used to provide information about the services and contents available via multicast or unicast channel(s). Content may comprise audio, video, audio-video information, or data. Content guide may be presented to a user as an on-screen guide to scheduled content and content on demand, allowing a user to navigate, select, and discover content by time, title, channel, genre, etc.

The television program provided via said IPTV interface may in particular comprise free TV channels (that may require e.g., an annual or regular fee) and premium TV channels (e.g., pay television).

However, it is a problem to start a premium TV channel without any awkward and inconvenient interruption, i.e., authentication and/or authorization, of a user.

For example, the user may receive the content information and watch a free TV program that does not require any authorization. A set-top-box or any IPTV terminal functionality (ITF) at the user joins a multicast group that is associated with the channel of the free TV program. In this example, the user may want to switch to a different program that is a premium TV channel and usually requires authorization. In such case, the user's set-top-box or IPTV terminal functionality is not aware of the premium content, i.e. the multicast addresses of e.g., premium TV channels, the user is authorized to access.

The objective to be solved is to overcome the disadvantages as stated above and in particular to allow for an uninterrupted user experience when selecting premium programs with multicast addresses requiring authentication and/or authorization.

This problem is solved according to the features of the independent claims. Further embodiments result from the depending claims. According to an example, in order to overcome this problem, a method for processing data is provided, said method comprising the steps:(a) a first network component requests a content information from a second network component; (b) the second network component provides a content information together with an access information;(c) the first network component requests from the second network component or from a third network component information relating to at least one multicast address to access the content by conveying said access information.

Hence, advantageously, the access information has already been provided to the first network component together with the content information, prior to requesting access to the content. Hence, the content information summarizes, e.g., programs that are available and the access information comprises information regarding authorization for a particular user (and/or subscription). Hence, based on the access information, the content may be filtered for a user and/or said access information may be used for authentication of a user's access to a particular selection of content.

In step (a) and/or step (c), the request sent by the first network component may be a HTTP-request, a SIP-request or the like.

According to another example, said information relating to the at least one multicast address comprises an at least one multicast address.

According to another example, said method comprises the steps: (d) the second network component or the third network component provides information relating to the at least one multicast address to access said content; (e) the first network component uses said information relating to the at least one multicast address to access the content.

According to a further example, the first

network component is a set-top-box or a device comprising an IPTV terminal functionality.

The first network component may also be or comprise, e.g., a functionality combined with or included in or provided by a network component, a device, a equipment, a element, a gateway, a customer network gateway, a server or a proxy.

In an example, the second network component is a function provided by or located at a service provider, in particular a function providing content information.

Content information may in particular relate to a content guide (CG) information and/or to an electronic program guide (EPG) and/or to a service guide (SG) and/or to an interactive program guide (IPG) or the like and/or any information relating to television, video, audio, video-audio, data or any programs or combinations thereof, in particular to program information (e.g., starting time, end time, duration, content information, parental rating, etc.). Such information may in particular be obtained via the Internet.

It is to be noted that the approach described herein does not only apply to television programs, but also to any other kind of content that requires authorization and/or authentication of a user. Any kind of information to be downloaded or streamed could be considered subject to this approach, e.g., video information, audio information, data information, video-audio information and/or other data (user data, service data, signaling data).

In another example, the access information comprises a token for authorization and/or authentication purposes.

In a further example, the token is based on a subscription and/or allows access to content based on said subscription, e.g., for an individual user (a family member, a hotel guest or the like).

According to yet another example, the token is based on a name and/or an identity and/or an address information of the first network component. Additionally, the token may be based on any information related to the subscription and/or the user (e.g., based on the identity of the subscription and/or the user). In particular, the token allows access to content based or located on said first network component. For example, a token may be a character string generated based on the identity of the subscription and on the address of the first network element.

In a next example, the access information comprises a profile information that is based on said subscription and identifies the content or part of the content that is allowed for said subscription.

It is also an example that upon receiving the access information, the first network component filters the content information pursuant to the profile information.

Hence, only a selection of the total content can be provided to a user of the first network component. For example, only a selection of free television channels and premium channels a user subscribed for may be displayed.

Pursuant to another example, in step (c) the first network component requests access to the content by conveying said token and said profile information.

According to an example, the first network component in step (c) requests information relating to the at least one multicast address (e.g., with HTTP request) from an IPTV application function.

According to another example, the IPTV application function requests authorization based on the token and/or the profile information and/or subscription information and/or user's identity from an authorization function and in the affirmative returns the information relating to the at least one multicast address requested to the first network component.

In yet another example, the information relating to the at least one multicast address returned to the first network component is protected and/or encrypted by said token or by data related to said token.

According to a next example, the first network component in step (c) requests information relating to the at least one multicast address from a gateway, a server or a proxy. Said gateway may in particular be an IP multimedia subsystem gateway (IMS gateway).

Pursuant to yet an example, the gateway, server or proxy utilizes a core network (e.g., SIP and/or IP core network) for authentication and for obtaining the information relating to the at least one multicast address from an IPTV application function. In case of a successful authentication and/or authorization, the information relating to the at least one multicast address may be sent from the gateway, server or proxy, to the first network component.
In addition, the information relating to the at least one multicast address returned may preferably be protected and/or encrypted by said token or by data related to said token.

According to another example, the first network component uses the information relating to the at least one multicast address to join a multicast stream in particular to receive a selected content. The first network component may in particular use an Internet Group Management Protocol and/or a Protocol Independent Multicast protocol or a similar protocol or mechanism to access the multicast stream.

It is an example that said content comprises at least one of the following:- a television program;- a radio program;- a data program;- a video program;-a video-audio program;
- any program available;- any data stream available;- data to be downloaded.

According to a further example, said content information may comprise:- a content guide information;- an electronic program guide;- a service guide;-an interactive program guide; and/or- any other guide(s).

The problem stated above is also solved by a device for data processing comprising a processor unit and/or a hard-wired circuit (e.g., an ASIC or an FPGA) that is equipped and/or arranged such that the method as described herein is executable thereon.

According to an example, said device comprises or is associated with an IPTV terminal functionality.

According to another example, said device is a set-top-box.

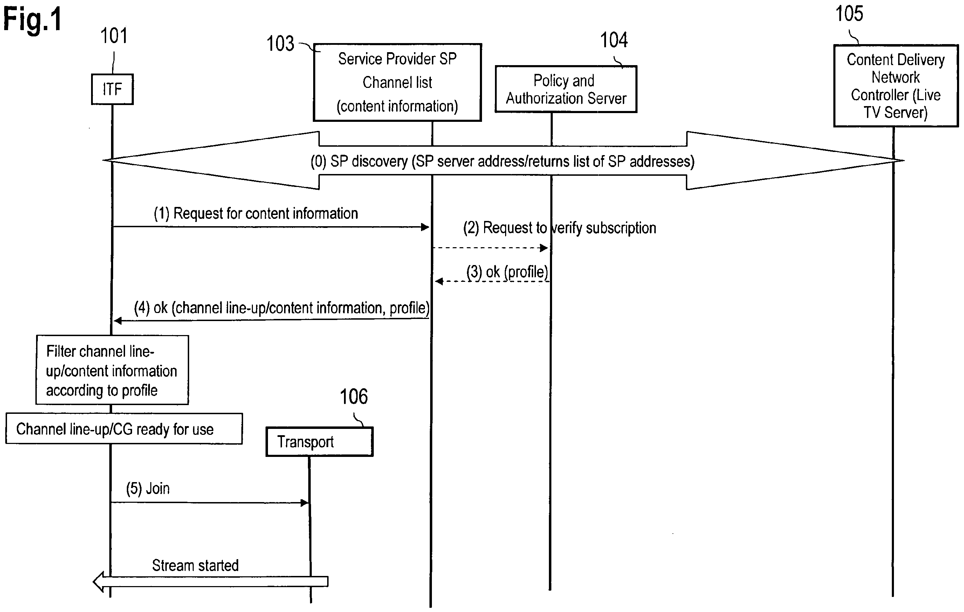

According to still another example, said device is or is associated with a gateway, a server, a proxy, a (network) equipment or a network element. In an example, the problem stated supra is further solved by a communication system comprising the device as described herein. Examples of the invention are shown and illustrated in the following figures:Fig.1 shows a message chart depicting as how an ITF obtains information on multicast addresses that are required for accessing premium channels, wherein said information on multicast addresses are included together with information on multicast addresses of ordinary (free) channels in a content guide information when it is (first) sent to the ITF from the network;

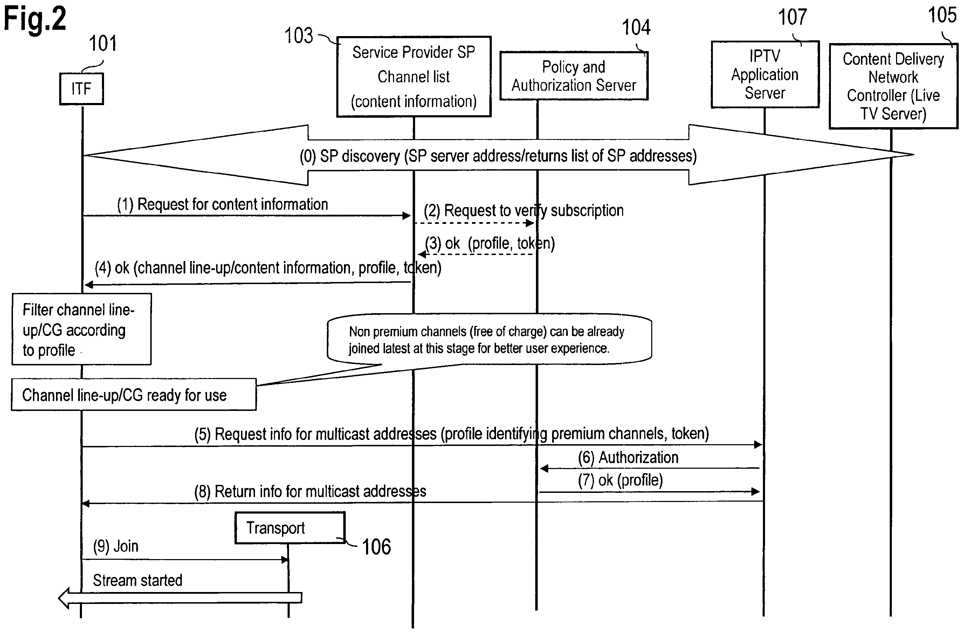

Fig.2 shows a message chart according to a use case for the live stream content guide (CG), wherein information on multicast addresses of premium channels are provided separately by an IPTV application server using an authorization token generated by a policy and authorization server, wherein said token is provided to the ITF together with information on multicast addresses of ordinary or free channels;

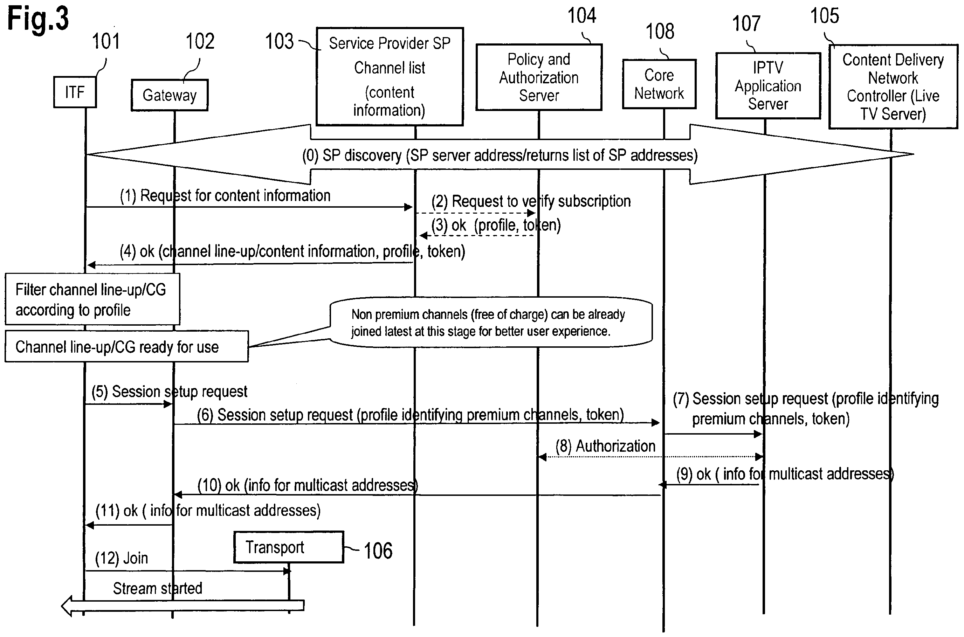

Fig.3 shows a message chart that is based on the message chart of Fig.2 except for the fact that a core network, e.g. a SIP/IP core, is used to route requests and responses to/from the IPTV application server.

The approach provided in particular allows an efficient program initiation as how a program is started from and/or based on a content guide (CG) information.

After retrieval of the content guide information, the information on multicast addresses of premium channels (e.g. pay-TV channels in a television application) are not yet provided and may have to be retrieved separately.

The information on multicast addresses are required in an IPTV terminal functionality (ITF), in particular in a set-top-box, in order to allow a user to sufficiently fast (i.e. without significant delay) change to said premium channels.

A profile of a user, e.g., an IPTV user profile information, is used when retrieving the information on multicast addresses of the premium channels. Advantageously, said IPTV user profile is obtained while retrieving the content guide. Hence, advantageously the user can switch between channels (also comprising premium channels to which the user needs to be authorized) without extra delay for the channel change, that may otherwise be required, e.g., for authorization purposes.

Such easy and comfortable access to the premium channels can be provided by a token used for authorization. This token allows the user accessing premium channels s/he subscribed for. However, the token may ensure that the user cannot see the information on multicast addresses of premium channels s/he is able to join. This information on multicast addresses need only to be known to the ITF or the set-top-box when joining a premium TV channel.

Preferably, the IPTV user can be authorized when requesting a channel-line-up information and/or a content guide information from the service provider.

Channel-line-up information means mapping of channels (e.g., TV channels) together with (relevant) multicast addresses.

In the following, examples are provided to show as how the user obtains correct information on multicast address for premium channels s/he signed up for.

**Fig.1** shows a message chart between an ITF 101, a service provider SP 103, a policy and authorization server 104, a content delivery network controller 105 and a transport entity 106.

Information on multicast addresses that are required for the ITF 101 to access premium channels are included together with information on multicast addresses of ordinary (free) channels in a content guide information when it is (first) sent to the ITF 101 from the network. The content guide information is preferably filtered in the ITF 101.

Fig.1 comprises in particular the following steps and/or messages:
(0) A service provider (SP) discovery is performed first. The ITF 101 receives information regarding available IPTV service provider(s).
(1) The ITF 101 sends a request, e.g., a HTTP request, to a selected service provider SP 103 to obtain a channel line-up information and/or a content guide (CG) information.
(2) In order to authorize the user and/or the ITF 101 for the service, the service provider SP 103 sends a request, e.g., a HTTP Request, to the policy and authorization server 104 comprising a subscription of the user and/or ITF 101.
(3) The policy and authorization server 104 validates the subscription of the user and/or ITF 101 and provides an IPTV user profile of the subscriber to the service provider SP 103.
(4) In case of a successful authorization of the user and/or ITF 101, the service provider SP 103 returns the content guide information and/or the channel line-up information and the IPTV user profile together with information on multicast addresses of all channels to which the subscription is authorized to the ITF 101.
   The ITF 101 may perform a filtering of the channel line-up information and/or content guide information obtained. Such filtering may in particular be provided according to the IPTV user profile received. For example, the IPTV user profile may indicate that only a selection of all available channels are displayed (filtered), in particular those channels the user is allowed to watch and hence may select. Such selection may comprise free channels as well as premium channels (pay-TV).
(5) The ITF 101 sends a join request, e.g., Internet Group Management Protocol (IGMP) or Protocol Independent Multicast protocol message or the like towards the transport entity 106 in order to join an (ongoing) multicast stream to see a (premium or free) TV channel.

**Fig.2** shows a message chart based on the components depicted in Fig.1 together with an IPTV application server 107.

Fig.2 is a use case for the live stream content guide (CG) retrieval in an open Internet environment. The content guide information may be filtered in the ITF device 101, information on multicast addresses to premium channels are requested separately.

According to Fig.2, information on multicast addresses of premium channels are provided separately by the IPTV application server 107 using an authorization token generated by the policy and authorization server 104 and provided to the ITF 101 together with information on multicast addresses of ordinary or free channels.

Fig.2 comprises in particular the following steps and/or messages, e.g., after switching on the ITF 101:
(0) A service provider (SP) discovery is performed first. The ITF 101 receives information regarding available IPTV service provider(s).
(1) The ITF 101 sends a request, e.g., a HTTP request, to a selected service provider SP 103 to obtain a channel line-up information and/or a content guide (CG) information.
(2) In order to authenticate and/or authorize the user and/or ITF 101 for the service, the service provider SP 103 sends a request, e.g., a HTTP Request, to the policy and authorization server 104 comprising a subscription of the user and/or ITF 101.
(3) The policy and authorization server 104 validates the subscription of the user and/or ITF 101 and provides an IPTV user profile of the subscriber and an authorization token to the service provider SP 103.
(4) In case of a successful authorization of the user and/or ITF 101, the service provider SP 103 returns the content guide information and/or the channel line-up information and the IPTV user profile together with information on multicast addresses of non-premium channels as well as the authorization token to the ITF 101.
   The ITF 101 may perform a filtering of the channel line-up information and/or content guide information obtained. Such filtering may in particular be provided according to the IPTV user profile received. For example, the IPTV user profile may indicate that only a selection of all available channels are displayed (filtered), in particular those channels the user is allowed to watch and hence may select. Such selection may comprise free channels as well as premium channels (pay-TV).
(5) The ITF 101 sends a request for information on multicast addresses of premium channels to the IPTV application server 107 including the authorization token and the profile information identifying the premium channels.
   Said request can be sent by the ITF 101 shortly (immediately) after the ITF 101 received the message (4).
(6) The IPTV application server 107 initiates a request for authorization to the premium channels from the policy and authorization server 104 forwarding the profile information identifying the premium channels and the authorization token.
(7) The policy and authorization server 104 may authorize the request (6) by sending a confirmation to the IPTV application server 107. Preferably, this response comprises the verified profile.
(8) The IPTV application server 107 checks the received (IPTV user) profile (in particular the portion thereof relevant for the premium channels) and returns the information regarding information on multicast addresses of the premium channels to the ITF 101, protected (encrypted) by the authorization token.
   Hence, the ITF 101 obtained information on multicast addresses of all channels (free of charge as well as premium) the user is authorized to watch (e.g., for which the user has subscribed). The information on multicast addresses of the premium channels are preferably protected by the authorization token. Optionally, other information on multicast addresses (e.g., for non-premium channels) may be similarly protected.
(9) The ITF 101 sends a join request, e.g., an IGMP/PIM message towards the transport entity 106 in order to join an (ongoing) multicast stream to see a (premium or free) TV channel. The ITF 101 may also send a join request, e.g., a IGMP/PIM message, towards the transport element 106 (immediately) after message (4) to allow the user to watch free TV channels.
As an example for the token-based authorization, the IPTV application server 107 may return information relating to the at least one multicast address of each premium channel as a Uniform Resource Identifier URI, wherein the user part is an encrypted information that may comprise information on one or more multicast addresses and a time stamp indicating a duration (e.g., additional 3 days) the user is entitled to watch the program of the premium channel. The ITF 101 can decrypt the user part using information based on the token received in message (4).
In another example, information relating to the at least one multicast address may be completely encrypted using the authorization token. The ITF 101 is equipped to decrypt the information relating to the at least one multicast address using the authorization token.
Information relating to the at least one multicast address, e.g., in particular regarding the non-premium channels, may be included in a file, e.g. an XML file, and the file may be sent to the ITF 101 in message (4). Additionally information on multicast addresses, e.g., related to the premium channels, may be included in a file, e.g. an XML file, which is encrypted before sending it to the ITF 101 in message (8).

It is to be noted that the figures symbolically refer to entities that are not necessarily realized as separate devices. For example, the policy and authorization server 104 may also be deployed as a function that may be embedded in another entity, for example at a service provider's server.

The ITF may in particular be an entity that can be logically, functionally or physically divided in two or more entities or devices. For example, IPTV implementation for schools or hotels may comprise one or more ITF gateways, and/or servers and/or proxies and one or more ITF terminals. An ITF terminal may be located in every classroom or in every hotel room whereas an ITF gateway and/or server and/or proxy is deployed as a centralized device. The ITF gateway (server or proxy) plays the role of the ITF towards the network, whereas the ITF terminal plays the role of the ITF towards the user.

**Fig.3** shows a message chart based on the components depicted in Fig.2 together with a gateway 102, e.g., an IMS gateway, and a core network 108, e.g. a SIP/IP core network. The ITF 101 may comprise or be associated with the gateway functionality 102.

Fig.3 is a use case for the live stream content guide (CG) retrieval in a core network, e.g. SIP/IP core network. The content guide information may be filtered in the ITF 101, information relating to the at least one multicast address to premium channels are requested separately and delivered in the session response.

The example shown in Fig.3 corresponds to Fig.2, except for the fact that the core network 108, e.g., the SIP/IP core, is used to route requests and responses to/from the IPTV application server 107 and except for the fact that gateway 102, e.g. the IMS gateway, is used to route the request and responses to/from the ITF towards the core network 108, e.g. the SIP/IP core network.

Fig.3 comprises in particular the following steps and/or messages, e.g., after switching on the ITF 101:
(0) to (4) are identical to Fig.2 (see above).
(5) The ITF 101 sends a session setup request to the gateway 102, e.g. the IMS gateway (IG).
(6) The gateway 102 sends a request for the information relating to the at least one multicast address of premium TV channels to the core network 108, e.g. the SIP/IP core, including the authorization token and the profile information identifying the premium channels.
(7) The core network 108 forwards the session setup request to the IPTV application server 107.
(8) The IPTV application server 107 initiates a request for authorization to the premium channels from the policy and authorization server 104 forwarding the profile information identifying the premium channels and the authorization token.
   The policy and authorization server 104 may authorize the said request by sending a confirmation to the IPTV application server 107. Preferably, this response comprises the verified profile.
(9) The IPTV application server 107 checks the received (IPTV user) profile (in particular the portion thereof relevant for the premium channels) and returns the information relating to the at least one multicast address of the premium channels to the core network 108, preferably protected (encrypted) by the authorization token.
(10) The response comprising the (protected/encrypted) information relating to the at least one multicast address is forwarded from the core network 108 to the gateway 102.
(11) The gateway 102 forwards the response comprising the (protected/encrypted) information relating to the at least one multicast address to the ITF 101.
   Hence, the ITF 101 obtained information relating to the at least one multicast address of all channels (free of charge as well as premium) the user is authorized to watch (e.g., for which the user has subscribed). The information relating to the at least one multicast address of the premium channels is preferably protected by the authorization token. Optionally, other information relating to the at least one multicast address (e.g., for non-premium channels) may be similarly protected.
(12) The ITF 101 sends a join request, e.g. a IGMP/PIM message or the like, towards the transport entity 106 in order to join an (ongoing) multicast stream for a (premium or free) TV channel.
   For example, a channel is started using the content guide information, in particular a URI of the program provided by the IPTV application server 107, wherein said URI has been provided by the IPTV application server 107 as an XML file or in an XML file. The ITF 101 stores the XML file and inserts only required parts thereof into a join request, e.g., into a IGMP or PIM setup request or into a similar request.

A subscriber or user profile and a token may be downloaded, stored or pre-set in the ITF in advance. Hence, messages (2) and (3) may be skipped in Fig.1, Fig.2 and Fig.3.

The protocols mentioned herein are examples only. Other protocols may be applicable as well.

The ITF may be implemented in a fixed device, e.g., in a home TV, a set-top-box, a personal device, a handheld device, a personal computer (PC), a mobile device, a mobile-fixed convergence device, a WLAN terminal, a WiMAX terminal or in similar equipments or devices.

It is to be noted that the IPTV (application) function can be a function that is capable of returning information of at least one multicast address and or information relating to at least one multicast address.

The IPTV application function may be a streaming address function which is capable of returning one or more streaming address. Such at least one streaming address may be provided based on a request received.

The streaming address function (e.g. IPTV application function) is capable of returning one or more streaming address (e.g. multicast address).

The streaming address function, e.g., the IPTV application function can be implemented on or associated with, e.g., a server, a gateway, a proxy, a network element, a network entity, a device or the like. It may further be combined with another server, gateway, proxy, network element, network entity, device or the like.

It is to be noted that the IPTV application function may comprise further or other streaming address functions beyond the pure IPTV application.

It is further noted that the Policy and Authorization server may be realized as a Policy and Authorization function or functionality. Hence, such Policy and Authorization server does not have to be deployed as (part of) a physical entity, it may as well be, e.g., a functionality located or associated with a component of the network.

Moreover, the "Service Provider SP Channel list (content information)" as referred to in the context of the service provider SP 103 (see figures) may be realized as a function that is capable of returning information regarding available streams. Hence, "Service Provider SP Channel list (content information)" is an example of a streaming list function which is capable of returning streaming lists. Sending of streaming list may be based on a request received. Such a function may be implemented as a server, a gateway, a proxy, a network element, a network entity, a device or the like. It may also be combined with another server, gateway, proxy, network element, network entity, device or the like. The content guide is an example of streaming lists.

### Abbreviations:

- CG: Content Guide
- CoD: Content on Demand
- EPG: Electronic Program Guide (synonym to CG)
- HTTP: Hyper Text Transfer Protocol
- IG: IMS Gateway
- IGMP: Internet Group Management Protocol
- IMS: IP Multimedia Subsystem
- IP: Internet Protocol
- IPG: Interactive Program Guide
- IPTV APP: IPTV Application
- IPTV MC: IPTV Media Control functionality
- IPTV SD: IPTV Service (Provider) Discovery
- IPTV: IP Television
- ITF: IPTV terminal functionality
- PIM: Protocol Independent Multicast
- SG: Service Guide
- SIP: Session Initiation Protocol
- SP: Service Provider
- STB: Set Top Box
- URI: Uniform Resource Identifier

## Claims

1. A method for processing data comprising the following steps:
(a) a first network component (101) requests content information from a second network component (103);
(b) the second network component (103) provides said content information together with access information;
(c) the first network component (101), by conveying said access information, requests from a third network component (107) information relating to at least one multicast address to access a content wherein said access information comprises a token for authorization and/or authentication purposes.

2. The method according to claim 1, wherein said information relating to the at least one multicast address comprises an at least one multicast address.

3. The method according to any of the preceding claims comprising the steps:
(d) the third network component (107) provides information relating to the at least one multicast address to access said content;
(e) the first network component (101) uses said information relating to the at least one multicast address to access the content.

4. The method according to any of the preceding claims, wherein the first network component (101) is a set-top-box or a device comprising an IPTV terminal functionality.

5. The method according to any of the preceding claims, wherein the second network component (103) is a function at a service provider, in particular a function providing the content information.

6. The method according to any of the preceding claims, wherein the token allows access to content located on said first network component (101).

7. The method according to any of the preceding claims, wherein the token is based on an identity and/or a name and/or an address information of the first network component (101).

8. The method according to any of the preceding claims, wherein the token is based on information of a subscription and/or a user and allows access to content based on said subscription.

9. The method according to claim 8, wherein the token allows access to content located on said first network component, wherein the token is a character string generated based on an identity of the subscription and an address of the first network component (101).

10. The method according to any of the preceding claims, wherein the access information comprises a profile information that is based on said subscription and identifies the content that is allowed for said subscription.

11. The method according to claim 10, wherein upon receiving the access information, the first network component (101) filters the content information pursuant to the profile information.

12. The method according to any of claims 10 or 11, wherein in step (c) the first network component (101 requests access to the content by conveying said token and said profile information.

13. The method according to any of claims 10 to 12, wherein the first network component (101) in step (c) requests information relating to the at least one multicast address from an IPTV application function.

14. The method according to claim 13, wherein the IPTV application function requests authorization based on the token and the profile information from an authorization function and in the affirmative returns the information relating to the at least one multicast address requested to the first network component (101).

15. The method according to claim 14, wherein the information relating to the at least one multicast address returned to the first network component (101) is protected and/or encrypted by said token.

16. The method according to any of the preceding claims, wherein the first network component (101) in step (c) requests information relating to the at least one multicast address from a gateway (102).

17. The method according to claim 16, wherein said gateway (102) is an IP multimedia subsystem gateway.

18. The method according to any of claims 16 or 17, wherein the gateway (102) utilizes a core network (108) for authentication and for obtaining the information relating to the at least one multicast address from an IPTV application function.

19. The method according to claim 18, wherein said core network (108) comprises a SIP and/or an IP core network.

20. The method according to any of claims 18 or 19, wherein in case of a successful authentication, the information relating to the at least one multicast address is sent from the gateway to the first network component (101).

21. The method according to any of claims 18 to 20, wherein the information relating to the at least one multicast address returned is protected and/or encrypted by said token or by data related to said token.

22. The method according to any of claims 13 to 21, wherein the first network component (101)uses the information relating to the at least one multicast address to join a multicast stream.

23. The method according to claim 22, wherein the first network component (101)uses an Internet Group Management Protocol or a Protocol Independent Multicast protocol to access the multicast stream.

24. The method according to any of the preceding claims, wherein said content comprises
- a television program;
- a video program;
- a video-audio program;
- a data program;
- any program available;
- any data stream available;
- a radio program;
- data to be downloaded.

25. The method according to any of the preceding claims, wherein said content information comprises:
- a content guide information;
- an electronic program guide;
- a service guide;
- an interactive program guide.

26. The method according to any of the preceding claims, wherein the request sent by the first network component (101) according to step (a) is a HTTP-request or a SIP-request and wherein the request sent by the first network component (101) according to step (c) is a HTTP-request or a SIP-request.

27. A system for processing data comprising a first network component (101), a second network component (103), and a third network component (107), wherein the system is arranged such that the method according to any of the preceding claims is executable therein

28. The system according to claim 27, wherein said first network component (101) comprises or is associated with an IPTV terminal functionality.

29. The system according to claim 27, wherein said first network component (101) is a set top-box.

30. The system according to claim 27, wherein said first network component (101) is or is associated with a gateway, a proxy, a server, a network equipment and/or a network element.

31. Communication system comprising the system according to any of claims 27 to 30.

## Patentansprüche

1. Verfahren zur Verarbeitung von Daten, aufweisend die folgenden Schritte:
(a) eine erste Netzwerkkomponente (101) fordert Inhaltsinformationen von einer zweiten Netzwerkkomponente (103) an;
(b) die zweite Netzwerkkomponente (103) stellt die Inhaltsinformationen zusammen mit Zugriffsinformationen bereit;
(c) die erste Netzwerkkomponente (101) fordert, durch Befördern der Zugriffsinformationen, von einer dritten Netzwerkkomponente (107) Informationen bezüglich mindestens einer Multicast-Adresse zum Zugriff auf einen Inhalt an, wobei die Zugriffsinformationen ein Token für Autorisierungs- und/oder Authentifizierungszwecke aufweisen.

2. Verfahren nach Anspruch 1, wobei die Informationen bezüglich der mindestens einen Multicast-Adresse mindestens eine Multicast-Adresse aufweisen.

3. Verfahren nach einem der vorhergehenden Ansprüche, aufweisend die Schritte:
(d) die dritte Netzwerkkomponente (107) stellt Informationen bezüglich der mindestens einen Multicast-Adresse zum Zugriff auf den Inhalt bereit;
(e) die erste Netzwerkkomponente (101) verwendet die Informationen bezüglich der mindestens einen Multicast-Adresse zum Zugriff auf den Inhalt.

4. Verfahren nach einem der vorhergehenden Ansprüche, wobei die erste Netzwerkkomponente (101) eine Set-Top-Box oder ein Gerät, das eine IPTV-Endgerätefunktion aufweist, ist.

5. Verfahren nach einem der vorhergehenden Ansprüche, wobei die zweite Netzwerkkomponente (103) eine Funktion bei einem Dienstanbieter, insbesondere eine Funktion, die die Inhaltsinformationen bereitstellt, ist.

6. Verfahren nach einem der vorhergehenden Ansprüche, wobei das Token den Zugriff auf Inhalt erlaubt, der sich auf der ersten Netzwerkkomponente (101) befindet.

7. Verfahren nach einem der vorhergehenden Ansprüche, wobei das Token auf einer Identität und/oder einem Namen und/oder einer Adressinformation der ersten Netzwerkkomponente (101) basiert.

8. Verfahren nach einem der vorhergehenden Ansprüche, wobei das Token auf Informationen eines Abonnements und/oder eines Benutzers basiert und den Zugriff auf Inhalt basierend auf dem Abonnement erlaubt.

9. Verfahren nach Anspruch 8, wobei das Token einen Zugriff auf Inhalt erlaubt, der sich auf der ersten Netzwerkkomponente befindet, wobei das Token eine basierend auf eine Identität des Abonnements und eine Adresse der ersten Netzwerkkomponente (101) erzeugte Zeichenfolge ist.

10. Verfahren nach einem der vorhergehenden Ansprüche, wobei die Zugriffsinformation Profilinformationen aufweist, die auf dem Abonnement basieren und den Inhalt identifizieren, der für das Abonnement erlaubt ist.

11. Verfahren nach Anspruch 10, wobei bei Empfang der Zugriffsinformationen die erste Netzwerkkomponente (101) die Inhaltsinformationen gemäß den Profilinformationen filtert.

12. Verfahren nach einem der Ansprüche 10 oder 11, wobei in Schritt (c) die erste Netzwerkkomponente (101) einen Zugriff auf den Inhalt durch Befördern des Tokens und der Profilinformationen anfordert.

13. Verfahren nach einem der Ansprüche 10 bis 12, wobei die erste Netzwerkkomponente (101) in Schritt (c) Informationen bezüglich der mindestens einen Multicast-Adresse von einer IPTV-Anwendungsfunktion anfordert.

14. Verfahren nach Anspruch 13, wobei die IPTV-Anwendungsfunktion eine Autorisierung basierend auf dem Token und den Profilinformationen von einer Autorisierungsfunktion anfordert, und, bei Zustimmung, die angeforderten Informationen bezüglich der mindestens einen Multicast-Adresse an die erste Netzwerkkomponente (101) zurückgibt.

15. Verfahren nach Anspruch 14, wobei die Informationen bezüglich der mindestens einen Multicast-Adresse, die an die erste Netzwerkkomponente (101) zurückgegeben werden, durch das Token gesichert und/oder verschlüsselt werden.

16. Verfahren nach einem der vorhergehenden Ansprüche, wobei die erste Netzwerkkomponente (101) in Schritt (c) Informationen bezüglich der mindestens einen Multicast-Adresse von einem Gateway (102) anfordert.

17. Verfahren nach Anspruch 16, wobei das Gateway (102) ein IP-Multimedia-Subsystem-Gateway ist.

18. Verfahren nach einem der Ansprüche 16 oder 17, wobei das Gateway (102) ein Kernnetzwerk (108) zur Authentifizierung und zum Erhalten der Informationen bezüglich der mindestens einen Multicast-Adresse von einer IPTV-Anwendungsfunktion verwendet.

19. Verfahren nach Anspruch 18, wobei das Kernnetzwerk (108) ein SIP- und/oder IP-Kernnetzwerk umfasst.

20. Verfahren nach einem der Ansprüche 18 oder 19, wobei im Falle einer erfolgreichen Authentifizierung die Informationen bezüglich der mindestens einen Multicast-Adresse von dem Gateway an die erste Netzwerkkomponente (101) gesendet werden.

21. Verfahren nach einem der Ansprüche 18 bis 20, wobei die zurückgegebenen Informationen bezüglich der mindestens einen Multicast-Adresse durch das Token oder durch Daten bezüglich des Tokens geschützt und/oder verschlüsselt werden.

22. Verfahren nach einem der Ansprüche 13 bis 21, wobei die erste Netzwerkkomponente (101) die Informationen bezüglich der mindestens einen Multicast-Adresse verwendet, um einem Multicast-Strom beizutreten.

23. Verfahren nach Anspruch 22, wobei die erste Netzwerkkomponente (101) ein Internet-Group-Management-Protokoll oder ein protokollunabhängiges Multicast-Protokoll verwendet, um auf den Multicast-Stream zuzugreifen.

24. Verfahren nach einem der vorhergehenden Ansprüche, wobei der Inhalt aufweist:
- ein Fernsehprogramm;
- ein Videoprogramm;
- ein Video-Audio-Programm;
- ein Datenprogramm;
- ein beliebiges verfügbares Programm;
- einen beliebigen verfügbaren Datenstrom,
- ein Radioprogramm;
- Daten zum Herunterladen.

25. Verfahren nach einem der vorhergehenden Ansprüche, wobei die Inhaltsinformationen aufweisen:
- Inhaltsübersichtsinformation;
- eine elektronische Programmübersicht;
- eine Dienstübersicht;
- eine interaktive Programmübersicht.

26. Verfahren nach einem der vorhergehenden Ansprüche, wobei die von der ersten Netzwerkkomponente (101) gemäß Schritt (a) gesendete Anforderung eine HTTP-Anforderung oder eine SIP-Anforderung ist und die von der ersten Netzwerkkomponente (101) gemäß Schritt (c) gesendete Anforderung eine HTTP-Anforderung oder eine SIP-Anforderung ist.

27. System zum Verarbeiten von Daten, aufweisend eine erste Netzwerkkomponente (101), eine zweite Netzwerkkomponente (103), und eine dritte Netzwerkkomponente (107), wobei das System derart eingerichtet ist, dass das Verfahren nach einem der vorhergehenden Ansprüche darin ausgeführt werden kann.

28. System nach Anspruch 27, wobei die erste Netzwerkkomponente (101) eine IPTV-Endgerätefunktion aufweist oder dieser zugeordnet ist.

29. System nach Anspruch 27, wobei die erste Netzwerkkomponente (101) eine Set-Top-Box ist.

30. System nach Anspruch 27, wobei die erste Netzwerkkomponente (101) ein Gateway, ein Proxy, ein Server, ein Netzwerkgerät und/oder ein Netzwerkelement ist oder diesem zugeordnet ist.

31. Kommunikationssystem, das das System nach einem der Ansprüche 27 bis 30 aufweist.

## Revendications

1. Procédé pour traiter des données, comprenant les étapes suivantes :
(a) un premier composant de réseau (101) demande en requête une information de contenu à un deuxième composant de réseau (103) ;
(b) le deuxième composant de réseau (103) fournit ladite information de contenu en association avec une information d'accès ;
(c) le premier composant de réseau (101), en convoyant ladite information d'accès, demande en requête à un troisième composant de réseau (107) une information se rapportant à au moins une adresse de multidiffusion pour accéder à un contenu, dans lequel ladite information d'accès comprend un jeton à des fins d'autorisation et/ou d'authentification.

2. Procédé selon la revendication 1, dans lequel ladite information se rapportant à l'au moins une adresse de multidiffusion comprend au moins une adresse de multidiffusion.

3. Procédé selon l'une quelconque des revendications précédentes, comprenant les étapes suivantes :
(d) le troisième composant de réseau (107) fournit une information se rapportant à l'au moins une adresse de multidiffusion pour accéder audit contenu ;
(e) le premier composant de réseau (101) utilise ladite information se rapportant à l'au moins une adresse de multidiffusion pour accéder au contenu.

4. Procédé selon l'une quelconque des revendications précédentes, dans lequel le premier composant de réseau (101) est un boîtier décodeur ou un dispositif qui comprend une fonctionnalité de terminal IPTV.

5. Procédé selon l'une quelconque des revendications précédentes, dans lequel le deuxième composant de réseau (103) est une fonction au niveau d'un fournisseur de services, en particulier une fonction qui fournit l'information de contenu.

6. Procédé selon l'une quelconque des revendications précédentes, dans lequel le jeton permet un accès à un contenu qui est situé sur ledit premier composant de réseau (101).

7. Procédé selon l'une quelconque des revendications précédentes, dans lequel le jeton est basé sur une identité et/ou un nom et/ou une information d'adresse du premier composant de réseau (101).

8. Procédé selon l'une quelconque des revendications précédentes, dans lequel le jeton est basé sur une information d'un abonnement et/ou d'un utilisateur et il permet un accès à un contenu sur la base dudit abonnement.

9. Procédé selon la revendication 8, dans lequel le jeton permet un accès à un contenu qui est situé sur ledit premier composant de réseau, dans lequel le jeton est une chaîne de caractères qui est générée sur la base d'une identité de l'abonnement et d'une adresse du premier composant de réseau (101) .

10. Procédé selon l'une quelconque des revendications précédentes, dans lequel l'information d'accès comprend une information de profil qui est basée sur ledit abonnement et qui identifie le contenu qui est autorisé pour ledit abonnement.

11. Procédé selon la revendication 10, dans lequel, suite à la réception de l'information d'accès, le premier composant de réseau (101) filtre l'information de contenu conformément à l'information de profil.

12. Procédé selon l'une quelconque des revendications 10 ou 11, dans lequel, au niveau de l'étape (c), le premier composant de réseau (101) demande en requête un accès au contenu en convoyant ledit jeton et ladite information de profil.

13. Procédé selon l'une quelconque des revendications 10 à 12, dans lequel le premier composant de réseau (101), au niveau de l'étape (c), demande en requête une information se rapportant à l'au moins une adresse de multidiffusion à une fonction d'application IPTV.

14. Procédé selon la revendication 13, dans lequel la fonction d'application IPTV demande en requête une autorisation sur la base du jeton et de l'information de profil à une fonction d'autorisation et dans l'affirmative, elle retourne l'information se rapportant à l'au moins une adresse de multidiffusion demandée en requête au premier composant de réseau (101).

15. Procédé selon la revendication 14, dans lequel l'information se rapportant à l'au moins une adresse de multidiffusion qui est retournée au premier composant de réseau (101) est protégée et/ou cryptée au moyen dudit jeton.

16. Procédé selon l'une quelconque des revendications précédentes, dans lequel le premier composant de réseau (101), au niveau de l'étape (c), demande en requête une information se rapportant à l'au moins une adresse de multidiffusion à une passerelle (102).

17. Procédé selon la revendication 16, dans lequel ladite passerelle (102) est une passerelle de sous-système multimédia IP.

18. Procédé selon l'une quelconque des revendications 16 ou 17, dans lequel la passerelle (102) utilise un réseau d'infrastructure (108) pour une authentification et pour obtenir l'information se rapportant à l'au moins une adresse de multidiffusion à partir d'une fonction d'application IPTV.

19. Procédé selon la revendication 18, dans lequel ledit réseau d'infrastructure (108) comprend un réseau d'infrastructure SIP et/ou IP.

20. Procédé selon l'une quelconque des revendications 18 ou 19, dans lequel, dans le cas d'une authentification couronnée de succès, l'information se rapportant à l'au moins une adresse de multidiffusion est envoyée depuis la passerelle au premier composant de réseau (101).

21. Procédé selon l'une quelconque des revendications 18 à 20, dans lequel l'information se rapportant à l'au moins une adresse de multidiffusion qui est retournée est protégée et/ou cryptée au moyen dudit jeton ou au moyen de données rapportées audit jeton.

22. Procédé selon l'une quelconque des revendications 13 à 21, dans lequel le premier composant de réseau (101) utilise l'information se rapportant à l'au moins une adresse de multidiffusion pour joindre un flux de multidiffusion.

23. Procédé selon la revendication 22, dans lequel le premier composant de réseau (101) utilise un protocole de gestion de groupe Internet ou un protocole de multidiffusion indépendant du protocole pour accéder au flux de multidiffusion.

24. Procédé selon l'une quelconque des revendications précédentes, dans lequel ledit contenu comprend :
- un programme de télévision ;
- un programme vidéo ;
- un programme vidéo-audio ;
- un programme de données ;
- n'importe quel programme disponible ;
- n'importe quel flux de données disponible ;
- un programme radio ;
- des données à télécharger.

25. Procédé selon l'une quelconque des revendications précédentes, dans lequel ladite information de contenu comprend :
- une information de guide de contenu ;
- un guide de programme électronique ;
- un guide de service ;
- un guide de programme interactif.

26. Procédé selon l'une quelconque des revendications précédentes, dans lequel la requête qui est envoyée par le premier composant de réseau (101) selon l'étape (a) est une requête HTTP ou une requête SIP et dans lequel la requête qui est envoyée par le premier composant de réseau (101) selon l'étape (c) est une requête HTTP ou une requête SIP.

27. Système pour traiter des données, comprenant un premier composant de réseau (101), un deuxième composant de réseau (103) et un troisième composant de réseau (107), dans lequel le système est agencé de telle sorte que le procédé selon l'une quelconque des revendications précédentes puisse être exécuté en son sein.

28. Système selon la revendication 27, dans lequel ledit premier composant de réseau (101) comprend une fonctionnalité de terminal IPTV ou est associé à une telle fonctionnalité.

29. Système selon la revendication 27, dans lequel ledit premier composant de réseau (101) est un boîtier décodeur.

30. Système selon la revendication 27, dans lequel ledit premier composant de réseau (101) est une passerelle, un proxy, un serveur, un équipement de réseau et/ou un élément de réseau ou est associé à une telle entité.

31. Système de communication comprenant le système selon l'une quelconque des revendications 27 à 30.
